Europäisches Patentamt

European Patent Office

Office européen des brevets

(19)

(11) **EP 1 589 394 B1**

(12) **FASCICULE DE BREVET EUROPEEN**

(45) Date de publication et mention
de la délivrance du brevet:
**22.11.2006 Bulletin 2006/47**

(51) Int Cl.:
***G06F 21/02*** *(2006.01)*

(21) Numéro de dépôt: **05007485.5**

(22) Date de dépôt: **06.04.2005**

(54) **Microprocesseur comprenant des moyens de détection d'erreur immunisés contre une attaque par injection d'erreur**

Mikroprozessor mit Mitteln zur Detektion von Fehlern, immunisiert gegen einen Fehlerinjektionsangriff

Microprocessor comprising means for detecting errors, immunized against an error injection attack

(84) Etats contractants désignés:
**DE FR GB IT**

(30) Priorité: **21.04.2004 FR 0404184**

(43) Date de publication de la demande:
**26.10.2005 Bulletin 2005/43**

(73) Titulaire: **STMicroelectronics S.A.**
**92120 Montrouge (FR)**

(72) Inventeurs:
• **Bancel, Frédéric**
**13113 Lamanon (FR)**
• **Berard, Nicolas**
**Le Puits Sainte Marie**
**13530 Trets (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 1 376 367** **US-A- 6 038 667**
**US-A1- 2004 034 823**

**Description**

La présente invention concerne la protection des circuits intégrés à microprocesseur contre les attaques par injection d'erreur.

La présente invention concerne plus particulièrement un procédé pour surveiller l'exécution d'une séquence de codes-instructions dans un circuit intégré comprenant une unité centrale de traitement prévue pour exécuter de tels codes-instructions, ainsi qu'un circuit intégré du type précité comprenant des moyens de surveillance de l'exécution d'au moins une séquence de codes-instructions comportant au moins un code-instruction.

Ces dernières années, les techniques de piratage des circuits intégrés sécurisés à microprocesseur (microprocesseurs, microcontrôleurs, mémoires à microprocesseur...) ont considérablement évolué. A l'heure actuelle, les méthodes de piratage les plus avancées consistent à injecter des erreurs en des points déterminés d'un circuit intégré lors de l'exécution d'opérations dites sensibles, par exemple des opérations d'authentification ou des opérations d'exécution d'un algorithme de cryptographie. De telles attaques par injection d'erreur, appelées également attaques par injection de faute, permettent, en combinaison avec des modèles mathématiques, de déduire la structure d'un algorithme de cryptographie et/ou les clefs secrètes qu'il utilise. L'injection de faute peut être faite de diverses manières, en introduisant des perturbations ("glitches") dans la tension d'alimentation du circuit intégré, en introduisant des perturbations dans le signal d'horloge du circuit intégré, en exposant le circuit intégré à des radiations, etc..

Ainsi, la détection des injections d'erreur est considérée comme une mesure essentielle pour garantir un haut niveau de sécurité à certains circuits intégrés, notamment les circuits intégrés pour cartes à puce.

On connaît déjà, notamment par EP 1 161 725, un procédé de surveillance de l'exécution d'un programme consistant à produire des signatures cumulatives qui sont fonction des codes-instructions qui défilent dans le registre d'instructions d'un microprocesseur. Un tel procédé permet de détecter un déraillement du programme en cours d'exécution, dû notamment à une injection d'erreur. Toutefois, un type d'attaque contre lequel un circuit intégré à microprocesseur doit être protégé est l'injection d'erreur dans les données fournies à un élément périphérique, notamment un bloc de calcul cryptographique (qui est généralement intégré sur la même microplaquette de silicium que le microprocesseur). Or, le contrôle de la bonne exécution d'une séquence de codes-instructions ne permet pas de détecter une telle attaque, car le programme s'exécute normalement en ce qui concerne la valeur et la succession des codes-instructions dans le registre d'instructions. Ainsi, ce procédé de surveillance classique ne permet pas de détecter une injection d'erreur dans les chemins de données voire dans des signaux de contrôle du microprocesseur.

La présente invention se base sur la constatation selon laquelle l'exécution de codes-instructions par l'unité centrale de traitement (CPU) d'un circuit intégré à microprocesseur fait intervenir divers signaux qui sont parfois déterministes, c'est à dire prédictibles, et parfois non déterministes. La structure du microprocesseur étant connue du fabricant et généralement de l'utilisateur professionnel, il est possible de dresser un inventaire, pour chaque code-instruction exécuté, des signaux qui sont du type déterministe parmi l'ensemble des signaux d'adresse, de contrôle ou de données intervenant dans l'exécution du code-instruction, et de produire des signatures à partir de tels signaux. Par exemple, des données de type opérande lues dans une mémoire morte comme une mémoire ROM, ou dans des zones protégées en écriture d'une mémoire effaçable et programmable électriquement, sont des données déterministes. Sont également déterministes des adresses circulant sur un bus d'adresse pendant l'exécution de codes-instructions, notamment les adresses de lecture des codes-instructions eux-mêmes (cycles "fetch"), ainsi que des adresses d'opérandes. Selon l'invention, sont également déterministes des signaux de contrôle apparaissant dans le microprocesseur pendant l'exécution des codes-instructions, par exemple des signaux de lecture/écriture, des signaux de sélection de mémoires ou de registres, et des signaux indiquant que l'unité centrale effectue une opération déterminée.

Ainsi, une première idée de la présente invention est de surveiller l'exécution d'une séquence de codes-instructions comprenant au moins un code-instruction en produisant des signatures cumulatives à partir d'une pluralité de signaux déterministes intervenant dans l'exécution du ou des codes-instructions, et de comparer une signature finale obtenue à une signature attendue. Une telle signature attendue peut être déterminée par le programmeur puisqu'elle ne se fonde que sur des signaux déterministes et sur des enchaînements d'opérations déterministes.

D'autre part, le but poursuivi par une telle surveillance de l'exécution d'un programme est, bien entendu, d'émettre un signal d'erreur ayant une valeur active quand une anomalie est détectée. On entend par "valeur active" le fait que le signal d'erreur, lorsqu'il présente cette valeur, déclenche des opérations nécessaires à la protection du circuit intégré, par exemple l'application d'un signal de remise à zéro à l'unité centrale, ou la fourniture d'un signal d'interruption qui fait basculer l'unité centrale dans un sous-programme déterminé, la destruction de données sensibles présentes dans une mémoire, etc., ces diverses opérations de protection étant en soi bien connues de l'homme de l'art.

Selon les procédés de surveillance classiques, un signal d'erreur est généré lorsque le programme atteint une instruction finale de vérification de la signature, qui clôture l'exécution de la séquence de codes-instructions sous surveillance. Or, si un déraillement du programme intervient suite à une injection d'erreur, l'instruction finale de vérification de la signature n'est pas exécutée et le signal d'erreur n'est pas émis.

Une seconde idée de la présente invention est de fournir un signal d'erreur ayant par défaut la valeur active et ne pouvant être neutralisé qu'à la condition qu'une signature finale obtenue après exécution d'une séquence de codes-instructions soit égale à une signature attendue. Un tel signal d'erreur est masqué pendant l'exécution des opérations à contrôler, et le masquage est levé inconditionnellement après écoulement d'un laps de temps correspondant sensiblement au temps d'exécution des opérations à contrôler. Si le signal d'erreur n'a pas été neutralisé par l'apparition d'une signature valable au moment où le masquage est levé, celui-ci devient actif dans le circuit intégré puisqu'il n'est plus masqué.

Ainsi, selon un aspect, la présente invention prévoit un procédé pour surveiller l'exécution d'une séquence de codes-instructions dans un circuit intégré comprenant une unité centrale de traitement prévue pour exécuter de tels codes-instructions, comprenant les étapes consistant à : pendant l'exécution de la séquence, produire des signatures cumulatives courantes qui sont fonction de signaux logiques prélevés dans le circuit intégré, jusqu'à obtenir, au terme de l'exécution de la séquence, une signature cumulative finale ; pendant l'exécution de la séquence, produire un signal d'erreur ayant par défaut une valeur active et restant à la valeur active tant que la signature cumulative courante est différente d'une signature attendue ; masquer le signal d'erreur pendant un intervalle de temps prédéterminé correspondant sensiblement à la durée d'exécution présumée de la séquence, et lever inconditionnellement le masquage du signal d'erreur à l'expiration de l'intervalle de temps prédéterminé.

Selon un mode de réalisation, l'intervalle de temps prédéterminé est mesuré par une minuterie qui est activée par l'unité centrale avant le commencement de l'exécution de la séquence et qui émet un signal qui change de valeur lorsque la minuterie a terminé de mesurer l'intervalle de temps, et le masquage du signal d'erreur est assuré par un circuit logique qui est transparent ou non transparent vis-à-vis du signal d'erreur selon la valeur du signal émis par la minuterie.

Selon un mode de réalisation, chaque signature cumulative courante est produite en synchronisation avec un signal d'horloge en fonction d'une signature cumulative précédente et de signaux logiques déterministes d'adresse, de contrôle ou de données intervenant dans l'exécution de la séquence.

Selon un mode de réalisation, le signal d'horloge qui rythme la production des signatures est le signal d'horloge de l'unité centrale, et une signature cumulative courante est produite à chaque cycle d'horloge de l'unité centrale, pendant l'exécution de la séquence.

Selon un mode de réalisation, les signaux logiques en fonction desquels les signatures cumulatives courantes sont produites comprennent tout ou partie des signaux suivants : des adresses appliquées à des éléments périphériques de l'unité centrale, des signaux de contrôle des éléments périphériques, des signaux indicatif d'opérations en cours, des données formant des opérandes ou des codes-instructions, et un signal est exclu du calcul d'une signature cumulative s'il n'est pas déterministe pendant le cycle d'horloge durant lequel la signature est produite.

Selon un mode de réalisation, les signatures cumulatives sont produites au moyen d'un circuit de calcul de signatures à logique câblée comprenant des entrées parallèles reliées à des points du circuit intégré, et des entrées du circuit de calcul de signatures sont inhibées au moyen d'un circuit de masquage à logique câblée configurable, pour exclure des signaux non déterministes.

Selon un mode de réalisation, les entrées du circuit de calcul de signatures sont connectées à un bus de données, à un bus d'adresse, et à un bus de contrôle qui véhicule des signaux de contrôle d'éléments périphériques de l'unité centrale.

Selon un mode de réalisation, le calcul des signatures cumulatives est effectué au moyen d'un registre à décalage à contre-réaction linéaire.

La présente invention concerne également un circuit intégré comprenant une unité centrale de traitement pour exécuter un programme comprenant des codes-instructions, et des moyens de surveillance de l'exécution d'au moins une séquence de codes-instructions comportant au moins un code-instruction, dans lequel les moyens de surveillance comprennent un circuit de calcul de signatures pour produire des signatures cumulatives courantes qui sont fonction de signaux logiques prélevés dans le circuit intégré, le circuit de calcul de signatures fournissant, au terme de l'exécution de la séquence, une signature cumulative finale, un moyen de mémorisation d'une signature attendue, une minuterie pour mesurer un intervalle de temps prédéterminé, des moyens pour produire un signal d'erreur ayant par défaut une valeur active dès le commencement de l'exécution de la séquence, et restant à la valeur active tant que la signature cumulative courante est différente de la signature attendue, et des moyens pour masquer le signal d'erreur pendant la mesure de l'intervalle de temps par la minuterie, et lever inconditionnellement le signal d'erreur à l'expiration de l'intervalle de temps.

Selon un mode de réalisation, le circuit intégré comprend un circuit logique de masquage du signal d'erreur, recevant sur une entrée le signal d'erreur et sur une autre entrée un signal fourni par la minuterie, le circuit logique de masquage étant transparent ou non transparent vis-à-vis du signal d'erreur selon la valeur du signal émis par la minuterie.

Selon un mode de réalisation, le circuit intégré comprend un comparateur recevant sur une entrée la signature cumulative courante et sur une autre entrée la signature attendue, et un élément à mémoire tel une bascule pour fournir le signal d'erreur, agencé pour désactiver le signal d'erreur lorsque la sortie du comparateur indique une égalité de signatures.

Selon un mode de réalisation, le circuit intégré comprend un comparateur recevant sur une entrée la signature cumulative courante et sur une autre entrée la signature attendue, dont la sortie fournit le signal d'erreur, et des moyens pour exécuter une instruction de désactivation du circuit de calcul de signatures.

Selon un mode de réalisation, le circuit de calcul de signatures comprend des entrées parallèles reliées en divers points du circuit intégré où transitent des signaux logiques d'adresse, de contrôle ou de données intervenant dans l'exécution de la séquence et pouvant être déterministes, et un circuit de masquage à logique câblée configurable est agencé devant les entrées du circuit de calcul de signatures pour inhiber les entrées susceptibles de recevoir des signaux non déterministes pendant l'exécution de la séquence.

Selon un mode de réalisation, le circuit de masquage configurable comprend un registre accessible au moins en écriture pour recevoir une chaîne de bits formant un masque binaire.

Selon un mode de réalisation, le circuit de calcul de signatures comprend des entrées reliées à des points du circuit intégré où transitent tout ou partie des signaux suivants : des adresses appliquées à des éléments périphériques de l'unité centrale, des signaux de contrôle des éléments périphériques, des signaux indicatif d'opérations en cours, des données formant des opérandes ou des codes-instructions.

Selon un mode de réalisation, le circuit de calcul de signatures comprend des entrées reliées à un bus de données, des entrées reliées à un bus d'adresse, et des entrées reliées à un bus de contrôle sur lequel transitent des signaux de contrôle d'éléments périphériques de l'unité centrale.

Selon un mode de réalisation, le circuit de calcul de signatures est cadencé par un signal d'horloge de l'unité centrale, et calcule une signature cumulative courante à chaque cycle d'horloge, en remplaçant chaque signature précédente par une nouvelle signature, dans un registre de mémorisation de la signature courante.

Ces objets, caractéristiques et avantages ainsi que d'autres de la présente invention seront exposés plus en détail dans la description suivante d'un exemple de réalisation d'un circuit intégré selon l'invention, faite à titre non limitatif en relation avec les figures jointes parmi lesquelles :

- la figure 1 représente un circuit intégré à microprocesseur comprenant un dispositif de surveillance selon l'invention, représenté sous forme de blocs, et
- la figure 2 est une vue détaillée d'un circuit de production de signatures représenté sous forme de blocs en figure 1.

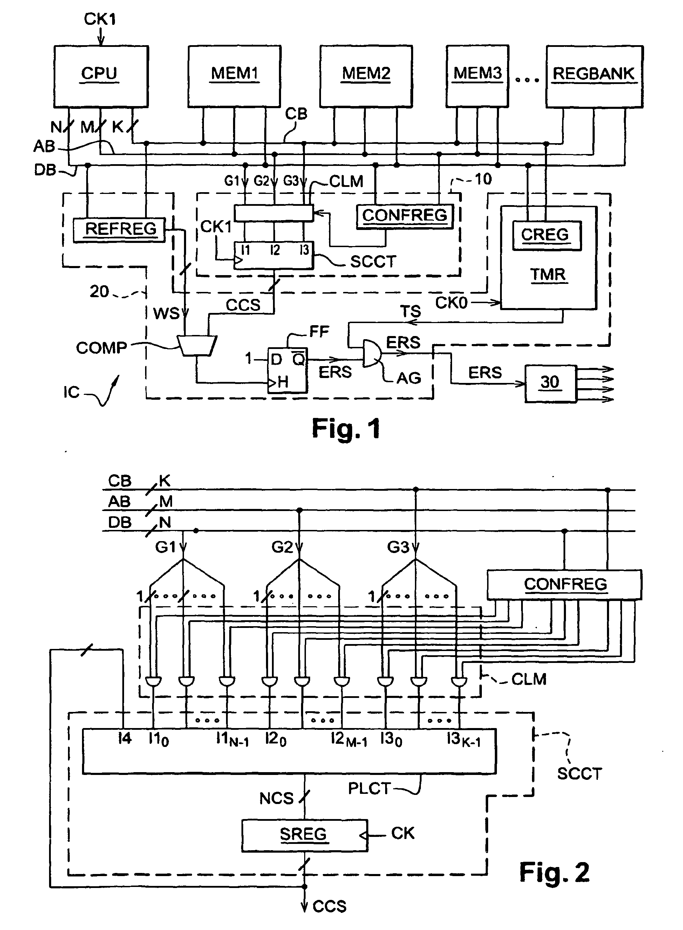

La figure 1 représente l'architecture d'un circuit intégré IC du type microprocesseur ou microcontrôleur, équipé d'un dispositif de surveillance selon l'invention. Un tel dispositif permet de surveiller le fonctionnement du circuit intégré pendant l'exécution d'une séquence de codes-instructions afin de détecter, notamment, une injection d'erreur.

Le circuit intégré IC comprend classiquement un CPU (unité centrale de traitement) et des éléments périphériques du CPU, ici des mémoires MEM1, MEM2, MEM3 et une banque de registres REGBANK. D'autres éléments périphériques peuvent être prévus, non représentés ici, notamment un circuit de calcul cryptographique. La mémoire MEM1 est par exemple une mémoire non volatile de type ROM (mémoire morte), la mémoire MEM2 une mémoire effaçable et programmable électriquement de type EEPROM, et la mémoire MEM3 une mémoire volatile de type RAM. La mémoire MEM1 contient par exemple des programmes maîtres (programmes développés par le fabriquant : programmes de test, de gestion de la sécurité, d'authentification...) et des opérandes. La mémoire MEM2 comprend par exemple des programmes application (programmes développés par l'utilisateur) et des opérandes. Ces divers programmes sont composés de codes-instructions exécutables par le CPU. La mémoire MEM3 contient généralement des données d'application, qui s'effacent lorsque le circuit intégré est hors tension. Enfin, la banque de registres REGBANK peut contenir des données volatiles comme des variables, des résultats de calculs, des drapeaux, etc.

Ces divers éléments périphériques sont reliés ici au CPU par un bus de données DB de N bits, un bus d'adresse AB de M bits ainsi qu'un bus de contrôle CB de K bits. On désigne par "bus de contrôle" un ensemble de fils véhiculant des signaux de sélection ou d'information émis par le CPU à l'attention des éléments périphériques, ou vice-versa. Le bus CB véhicule notamment des signaux SEL1, SEL2, SEL3 de sélection des mémoires MEM1, MEM2, MEM3, un signal SEL4 de sélection de la banque de registres REGBANK, un signal R/W de lecture ou écriture, ainsi qu'un signal FETCH émis par le CPU lors de la lecture d'un code-instruction dans l'une des mémoires programme MEM1, MEM2.

Le dispositif de surveillance selon l'invention comprend un circuit de production de signatures 10 et un circuit de détection d'erreur 20, délimités par des traits pointillés sur la figure 1. Chaque circuit 10, 20 est en soi indépendant de l'autre et correspond à un aspect de la présente invention. Ainsi, comme cela apparaîtra à la lecture de ce qui suit, le circuit 10 peut être combiné avec un circuit de détection d'erreur autre que le circuit 20 représenté, et vice-versa.

**Premier aspect de l'invention**

Le circuit de production de signatures 10 comprend tout d'abord un circuit de calcul de signatures SCCT à logique câblée. Le circuit SCCT comprend des entrées parallèles I1, I2, I3 et est cadencé par un signal d'horloge CK1 qui est de préférence le signal d'horloge du CPU. Le circuit SCCT est par exemple un registre LSFR classique (Linear Feedback Shift Register), soit un registre à décalage à contre réaction linéaire. Comme représenté plus en détail sur la figure 2, le circuit SCCT comprend un circuit logique PLCT et un registre de signature SREG à entrée et sortie de type parallèle. Le circuit PLCT exécute une fonction de signature Fs et comprend des entrées I1, I2, I3 formant les entrées du circuit SCCT, ainsi qu'une entrée I4 recevant une signature cumulative courante CCS. La sortie du circuit PLCT fournit à l'entrée du registre SREG une signature cumulative suivante NCS qui est fonction de la signature cumulative courante CCS et des entrées I1, I2, I3, soit :

$$(1) \quad NCS = Fs \ (CCS, \ I1, \ I2, \ I3)$$

A chaque nouveau cycle d'horloge CK1, le registre SREG recopie sur sa sortie la signature présente sur son entrée, de sorte que la signature suivante fournie par le circuit PLCT au cours du cycle d'horloge précédent devient la signature courante, et que la signature courante du cycle d'horloge précédent devient la signature précédente PCS, soit :

$$(2) \quad CCS = Fs \ (PCS, \ I1, \ I2, \ I3)$$

la relation (2) étant équivalente à la relation (1) vue depuis la sortie du registre SREG.

Selon l'invention, les entrées I1, I2, I3 du circuit SCCT sont reliées à divers points du circuit intégré où transitent des signaux d'adresse, de contrôle ou de données intervenant dans l'exécution des codes-instructions présents dans les mémoires MEM1, MEM2, et reçoivent des groupes G1, G2, G3 de signaux générateurs de signature. Ici, l'entrée I1 est reliée au bus de données DB, l'entrée I2 est reliée au bus d'adresse AB, et l'entrée I3 est reliée au bus de contrôle CB. Ainsi, le groupe de signaux G1 comprend N bits de données $d_0$, $d_1$, .. $d_{N-1}$ prélevés sur le bus de données, qui sont appliqués à N entrées élémentaires $I1_0$, $I1_1$, ...$I1_{N-1}$ formant l'entrée I1. Le groupe de signaux G2 comprend N bits d'adresse $a_0$, $a_1$... $a_{M-1}$ prélevés sur le bus d'adresse et appliqués à N entrées élémentaires $I2_0$, $I2_1$, ...$I2_{M-1}$ formant l'entrée I2. Le groupe de signaux G3 comprend K signaux de contrôle $c_0$, $c_1$... $C_{k-1}$ prélevés sur le bus de contrôle et appliqués à N entrées élémentaires $I3_0$, $I3_1$, ...$I3_{k-1}$ formant l'entrée 13.

Selon le postulat sur lequel se fonde l'invention, les signaux qui transitent en de tels points du circuit intégré peuvent être parfois déterministes et parfois non déterministes (non prédictibles) selon l'opération que le CPU exécute. Un signal est déterministe quand sa valeur est connue par le programmeur ainsi que l'instant où ce signal apparaît pendant l'exécution du programme. Par exemple, l'exécution d'une instruction de lecture d'un opérande dans la mémoire morte MEM1 est une opération qui est déterministe dans tous ses aspects, c'est-à-dire en ce qui concerne :

- la valeur de l'opérande qui est lue dans la mémoire, de sorte que les signaux apparaissant sur le bus de données (bits de l'opérande), formant le groupe G1, sont déterministes,
- l'adresse de lecture de l'opérande, de sorte que l'ensemble des signaux du groupe G2 apparaissant sur le bus d'adresse sont également déterministes, et
- le signal de sélection de la mémoire MEM1 et le signal de lecture R/W apparaissant sur le bus de contrôle, de sorte que l'ensemble des signaux du groupe G3 sont déterministes (les autres signaux de contrôle étant supposés inactifs, donc ayant également une valeur logique déterminée).

De même, l'exécution d'une opération de lecture (FETCH) d'un code-instruction est déterministe dans tous ses aspects, tant en ce qui concerne le code-instruction (bus de données , groupe G1) que l'adresse de lecture du code-instruction (bus d'adresse, groupe G2) que les signaux de contrôle (signal FETCH, signal de sélection de la mémoire MEM1 et MEM2, signal de lecture R/W, groupe G3).

Ces signaux peuvent également ne pas être déterministes, en tout ou en partie. Par exemple, une variable calculée en fonction d'une donnée ou d'un évènement non prédictible est une variable qui est elle-même non prédictible. Toutefois la lecture d'une telle variable dans une mémoire, par exemple dans la mémoire MEM3 (mémoire RAM) ou dans la banque de registres, bien que n'étant pas déterministe en ce qui concerne la valeur de la variable elle-même, peut être prédictible en ce qui concerne l'adresse de lecture de la variable si cette adresse a été déterminée par le programmeur et se trouve ainsi fixée par le programme, et ne dépend pas du résultat d'un calcul faisant intervenir un paramètre ou une donnée non prédictible. Dans ce cas, les signaux prélevés sur le bus de données, soit les signaux formant le groupe G1, ne sont pas déterministes, tandis que les signaux d'adresse formant le groupe G2 et les signaux de contrôle formant le groupe G3 le sont.

Ainsi, selon l'invention, les entrées I1, I2, I3 du circuit de calcul de signatures SSCT sont reliées aux bus DB, AB, CB par l'intermédiaire d'un circuit de masquage à logique câblée configurable CLM dont la configuration est assurée par un registre CONFREG. Le registre CONFREG est accessible au moins en écriture, de préférence en lecture/écriture, par l'intermédiaire du bus de données DB, et est relié au bus de contrôle pour sa sélection en lecture et/ou écriture.

Le registre CONFREG reçoit une chaîne de bits formant un masque binaire, constitué ici de trois masques binaires distincts M1, M2, M3 concaténés. Le masque M1 est prévu pour masquer tout ou partie des entrées élémentaires de l'entrée I1 et comprend N bits $m1_0, m1_1 ... m1_{N-1}$. Le masque M2 est prévu pour masquer tout ou partie des entrées élémentaires de l'entrée I2 et comprend M bits $m2_0, m2_1...m2_{M-1}$. Le masque M3 est prévu pour masquer tout ou partie des entrées élémentaires de l'entrée I3 et comprend K bits $m3_0, m3_1...m3_{K-1}$. Chaque bit de masque est ainsi associé à l'un des signaux générateurs de signature $d_0$ à $d_{N-1}$, $a_0$ à $a_{M-1}$, $C_0$ à $C_{K-1}$, respectivement, qu'il permet de masquer ou non.

Le registre CONFREG permet ainsi d'inhiber, parmi les N+M+K entrées du circuit SCCT, celles qui reçoivent, pendant une séquence de production de signatures, des signaux générateurs de signature qui ne sont pas déterministes. Le masquage est réalisé matériellement dans le circuit CLM au moyen d'une pluralité de portes ET recevant chacune sur une entrée l'un des signaux $d_0$ à $d_{N-1}$, $a_0$ à $a_{M-1}$, $c_0$ à $c_{K-1}$ et sur une autre entrée le bit de masque correspondant $m1_0$ à $m1_{N-1}$, $m2_0$ à $2_{M-1}$, $m3_0$ à $m3_{K-1}$, la sortie de chaque porte ET étant appliquée à l'entrée élémentaire correspondante $I1_0$ à $I1_{N-1}$, $I2_0$ à $I2_{M-1}$, $I3_0$ à $I3_{K-1}$ du circuit SCCT. Ainsi, la relation (2) ci-dessus s'écrit comme suit :

$$(3) \quad \texttt{CCS = Fs(PCS, G1*M1, G2*M2, G3*M3)}$$

"*" étant ici la fonction ET appliquée bit à bit.

Ici, un bit à 0 dans le masque binaire inhibe le signal générateur de signature de rang correspondant en forçant sa valeur à 0. Toute autre fonction d'inhibition combinatoire peut toutefois être utilisée, par exemple la fonction OU, NON OU, NON ET, etc.. Des interrupteurs pilotés par les bits du masque binaire peuvent également être utilisés comme moyens d'inhibition.

On décrira maintenant un exemple d'utilisation du circuit de production de signatures 10 pendant l'exécution d'un programme par le CPU. Au moment de l'élaboration du programme, les parties de programme correspondant à l'exécution d'opérations sensibles, c'est-à-dire des opérations nécessitant un haut niveau de sécurité, sont divisées en séquences déterministes. Chaque séquence déterministe comprend au moins un code-instruction ou une suite prédictible de codes-instructions. A titre de contre-exemple, une partie de programme comprenant une instruction de saut conditionnel qui est fonction d'une donnée non prédictible n'est pas une séquence déterministe. Une telle séquence doit alors être divisée en séquences déterministes de plus petite taille. Par ailleurs, l'exécution de chaque séquence déterministe fait intervenir des signaux d'adresse, de contrôle ou de données dont certains sont déterministes et d'autres ne le sont pas, comme expliqué ci-dessus. Il convient ainsi de pas confondre le caractère déterministe d'une séquence, sur lequel se fonde par exemple le procédé décrit par EP 1 161 725, et le caractère déterministe des signaux intervenant dans l'exécution de la séquence déterministe, sur lequel se fonde la présente invention.

Pour fixer les idées, considérons un exemple de séquence sécurisée comprenant une instruction de lecture d'un opérande à une adresse AD1 dans la mémoire MEM1, et une instruction d'écriture de l'opérande dans un registre d'adresse AD2 présent dans la banque de registres. Cette séquence, stockée dans la mémoire MEM1, comprend par exemple les codes-instructions suivants :

[READ MEM1] [AD1]
[WRITE REGBANK] [AD2]

Afin de sécuriser l'exécution de cette séquence, on insère dans le programme, avant la séquence elle-même, une instruction de chargement des masques M1, M2, M3 dans le registre CONFREG et une instruction de remise à zéro du registre de signature SREG (on suppose ici que le circuit SCCT est actif en permanence et ne nécessite pas d'être activé par une commande particulière pour produire des signatures). La séquence modifiée par insertion de ces instructions se présente alors ainsi (les termes figurant entre les signes "<" et ">" étant des commentaires) :

<chargement des masques M1, M2, M3 dans le registre CONFREG>
[LOAD CONFREG][M1, M2, M3]
<mise à 0 du registre SREG>
[RESET SREG]
<séquence sécurisée>
[READ MEM1][AD1] <code-instruction 1>
[WRITE REGBANK][AD2] <code-instruction 2>

Ici, le masque binaire chargé dans le registre CONFREG ne comporte que des bits à 1 car la séquence à exécuter ne comprend que des signaux déterministes, qu'il s'agisse de l'adresse de lecture ou d'écriture de l'opérande, de la valeur de l'opérande (opérande connu car présente en mémoire ROM) ou des signaux de contrôle. Par ailleurs, la remise à zéro du registre SREG a pour effet de placer dans celui-ci une signature initiale qui forme la valeur de départ (ou valeur de base) pour le calcul des signatures cumulatives. Cette valeur initiale peut aussi être choisie non nulle, pourvu qu'elle soit connue du programmeur afin qu'il puisse déterminer la signature attendue au terme de l'exécution de la séquence, comme cela sera décrit plus loin.

Après le cycle d'horloge suivant celui où le registre de signature SREG est remis à zéro, le circuit de calcul de signatures SCCT commence à produire des signatures cumulatives à chaque cycle d'horloge en tenant compte de tous les signaux déterministes prélevés dans le circuit intégré. Le tableau 1 ci-après décrit schématiquement le processus de production des signatures cumulatives courantes CS1, CS2, CS3... à chaque cycle d'horloge du CPU. On suppose ici que chaque instruction est lue en deux cycles d'horloge du CPU (cycles "fetch") et est exécutée en deux cycles d'horloge. On distingue ainsi les cycles suivants :

Cycle 1 : adressage de la mémoire MEM1 (cycle "fetch"),
Cycle 2 : lecture du code-instruction 1 (cycle "fetch"),
Cycle 3 : adressage de la mémoire MEM1 à l'adresse AD1,
Cycle 4 : lecture de l'opérande dans la mémoire MEM1 et chargement de l'opérande dans l'ALU du CPU,
Cycle 5 : adressage de la mémoire MEM1 (cycle "fetch"),
Cycle 6 : lecture du code-instruction 2 (cycle "fetch"),
Cycle 7 : lecture de l'ALU et placement de l'opérande sur le bus de données, adressage et sélection du registre d'adresse AD2 dans la banque de registres REGBANK
Cycle 8 : enregistrement de l'opérande dans le registre.

Ne sont représentés dans le tableau 1 que les signaux générateurs de signature ayant une valeur différente de leur valeur par défaut (valeur inactive). Les adresses AD_code1 et AD_code2 sont les adresses de lecture des deux codes-instructions de la séquence sécurisée, fournis par un compteur de programme PC de l'unité centrale, non représenté sur les figures. Le signal R/W est ici à 1 pour déclencher une lecture et à 0 pour une écriture. Les valeurs notées "xxx" sont des valeurs par défaut du bus de données ou d'adresse quand une donnée ou un code ne transite pas sur le bus. De telles valeurs par défaut sont déterministes et interviennent dans le calcul de la signature courante au cours du cycle d'horloge concerné. Enfin, les signaux de contrôle IN_ALU et OUT_ALU indiquent que le CPU effectue une opération interne de chargement ou respectivement de lecture d'opérande dans son unité arithmétique et logique ALU (non représentée sur les figures). De tels signaux de contrôle ne sont pas présents sur le bus de contrôle et ne sont donc pas pris en compte dans le calcul de signature. Toutefois ces signaux, ainsi que d'autres signaux internes du CPU, pourraient aussi être "externalisés" à l'instar du signal FETCH, afin d'être pris en compte dans le calcul de signature.

**Tableau 1**

| | Bus d'adresse | Bus de données | Bus de contrôle | Cycle | Signatures |
|---|---|---|---|---|---|
| **Lecture du code 1** | AD_code1 | [xxx] | SEL1=1 - FETCH=1 | 1 | CCS1 |
| | AD_code1 | code 1 | SEL1=1 - FETCH=1 R/W=1 | 2 | CCS2 |
| **Exécution du code 1** | AD1 | [xxx] | SEL1=1 | 3 | CCS3 |
| | AD1 | opérande | SEL1=1 - R/W=1 IN_ALU | 4 | CCS4 |
| **Lecture du code 2** | AD_code2 | [xxx] | SEL1=1 - FETCH=1 | 5 | CCS5 |
| | AD_code2 | code 2 | SEL1=1 FETCH=1 R/W=1 | 6 | CCS6 |
| **Exécution du code 2** | AD2 | opérande | SEL4=1 - OUT ALU | 7 | CCS7 |
| | AD2 | opérande | SEL4=1 - R/W=0 | 8 | CCS8 |

Ainsi, à chaque cycle d'horloge, une signature cumulative est produite. Lorsque la séquence est exécutée, la signature cumulative finale obtenue est la signature CCS8. Cette signature est prédictible et est ainsi présumée égale à une signature attendue WS déterminée par le programmeur au moment où le programme est conçu, de préférence au moyen d'un outil logiciel de calcul de signature. La comparaison de la signature finale avec la signature attendue est assurée par le circuit de détection d'erreur 20 qui sera maintenant décrit.

Supposons maintenant que l'adresse AD2 de chargement de l'opérande dans la banque de registre dépend du résultat d'une opération non déterministe effectuée par une partie de programme qui précède la séquence sécurisée. La séquence devient alors semi-déterministe.

Dans ce cas, les signaux sur le bus d'adresse ne sont pas pris en compte au cours des cycles 1 à 8 pour le calcul des signatures cumulatives, car l'adresse AD2 qui est appliquée sur le bus d'adresse au cours des cycles 7 et 8 n'est pas prédictible. Les valeurs des masques binaires sont donc M1=1, M2=0 (gel des bits d'adresse) et M3=1 pour l'ensemble de la séquence sécurisée.

La séquence semi-déterministe peut aussi être scindée en deux sous-séquences sécurisées individuellement, l'une étant entièrement déterministe et formée par les cycles 1 à 4 (exécution du premier code-instruction), l'autre étant semi-déterministe et formée par les cycles 5 à 8 (exécution du second code-instruction). Une première signature cumulative finale, calculée pendant les cycles 1 à 4 en portant à 1 tous les bits de masque, est produite au terme du cycle 4 et est comparée à une première signature attendue. Une seconde signature cumulative finale, calculée pendant les cycles 5 à 8 en portant à 0 le masque binaire M2 et à 1 les masques M1, M3, est produite au terme du cycle 8 et est comparée à une seconde signature attendue.

Il apparaîtra clairement à l'homme de l'art que ce premier aspect de la présente invention est susceptible de diverses variantes et modes de réalisation, notamment en ce qui concerne l'étendue, la nature et le nombre de signaux générateurs de signature pris en compte pour produire les signatures cumulatives. D'autre part, bien que l'on ait indiqué ci-dessus qu'une signature cumulative courante est produite à chaque cycle d'horloge du CPU, le procédé de l'invention peut aussi comprendre des étapes de production de signatures cadencées par un signal d'horloge plus lent que le signal d'horloge du CPU, par exemple la production d'une signature tous les deux ou trois cycles d'horloge du CPU. Toutefois, il est avantageux au plan de la sécurité de ne pas sauter des cycles d'horloge du CPU dans le calcul des signatures cumulatives.

**Second aspect de l'invention**

Comme le circuit 10 qui vient d'être décrit, le circuit de détection d'erreur 20 représenté en figure 1 est un circuit à logique câblée qui est autonome vis-à-vis du CPU hormis en ce qui concerne son initialisation et son activation.

Le circuit de détection d'erreur 20 comprend un registre REFREG, un comparateur COMP, une bascule synchrone FF de type Flip-flop (ou bascule D) et une minuterie TMR ("timer").

Le registre REFREG est accessible en lecture, de préférence en lecture/écriture, via le bus de données DB, et est sélectionné au moyen d'un fil du bus de contrôle CB. Il est prévu pour recevoir la signature attendue WS calculée par le programmeur.

La minuterie TMR est un décompteur équipé d'un registre de comptage CREG accessible en écriture, et de préférence en lecture/écriture, via le bus de données DB. La minuterie est cadencée par un signal d'horloge CK0, par exemple un signal d'horloge primaire du circuit intégré à partir duquel le signal d'horloge CK1 est produit. La minuterie est reliée au bus de contrôle CB pour la sélection du registre CREG en lecture/écriture ainsi que pour l'activation de la minuterie. Après chargement d'une consigne de comptage CVAL dans le registre CREG et activation de la minuterie, la minuterie décrémente le registre CREG et fournit un signal de sortie TS qui est à 0. Ce signal passe à 1 lorsque la valeur du registre CREG atteint le zéro. L'intervalle de temps mesuré est ainsi égal à CVAL/T, T étant la période du signal d'horloge CK0.

Le comparateur COMP présente une première entrée reliée à la sortie du registre REFREG, qui reçoit la signature attendue WS, et une seconde entrée reliée à la sortie du registre SREG du circuit de production de signatures 10, qui reçoit la signature cumulative courante CCS. La sortie du comparateur COMP est à 0 tant que la signature courante est différente de la signature attendue, et passe à 1 lorsque les signatures sont égales.

La bascule FF comporte une entrée D, une entrée de synchronisation H, une sortie inversée /Q qui fournit un signal d'erreur ERS, et une entrée RST de remise à zéro. L'entrée D reçoit en permanence la valeur logique 1 et l'entrée H est connectée à la sortie du comparateur COMP. La sortie /Q recopie l'entrée D en inversant sa valeur lorsqu'un front montant apparaît sur l'entrée H. L'entrée RST est reliée à un fil du bus de contrôle CB de manière que la remise à zéro de la bascule FF intervienne automatiquement lorsqu'une signature attendue WS est chargée dans le registre REFREG.

Ainsi, lorsqu'une signature attendue WS est chargée dans le registre REFREG, la bascule FF est remise à zéro et le signal d'erreur ERS sur la sortie /Q passe à 1 tandis que la sortie du comparateur COMP est à 0. Lorsqu'une signature courante CCS est égale à la signature attendue WS et que la sortie du comparateur COMP passe à 1, l'entrée H voit un front montant qui déclenche la bascule. La sortie /Q recopie l'entrée D en inversant sa valeur, de sorte que le signal d'erreur ERS passe à 0.

Par convention, la valeur "1" du signal d'erreur est une valeur active qui provoque un arrêt ou une remise à zéro du CPU ou toute autre mesure d'urgence connue de l'homme de l'art. Ainsi, le signal d'erreur est par défaut à la valeur active et n'est inhibé (passage à 0) que si une signature courante coïncide, à un instant donné, avec la signature attendue WS.

Le signal d'erreur ERS est appliqué à un circuit 30 de gestion d'erreur par l'intermédiaire d'une porte logique AG de type ET qui forme un masque du signal d'erreur. La porte AG reçoit le signal d'erreur ERS sur une entrée et le signal de minuterie TS sur une autre entrée, et sa sortie est appliquée au moyen du circuit de gestion d'erreur 30.

Le circuit 30 est de tout type connu, par exemple un décodeur d'interruption fournissant un signal d'interruption, un circuit de remise à zéro du circuit intégré, un dispositif qui efface automatiquement des données confidentielles présentes dans la mémoire EEPROM (MEM2), etc..

Ainsi, le signal d'erreur ERS fourni par la porte AG au circuit 30 est forcé à 0 par le signal de minuterie TS tant que la minuterie n'a pas terminé le décomptage de la consigne CVAL. Le masquage du signal d'erreur est levé lorsque le signal TS passe à 1. A cet instant, si le signal d'erreur est encore à 1 en sortie de la bascule FF, la sortie de la porte AG passe à 1 et le circuit 30 est activé.

Comme pour le circuit de production de signatures 10, le paramétrage et l'activation du circuit de détection d'erreur 20 comprennent l'insertion d'instructions spécifiques dans le programme exécuté par le CPU, notamment des instructions de chargement de la consigne de comptage CVAL, de chargement de la signature attendue WS et d'activation de la minuterie. Une séquence incorporant de telles instructions se présente par exemple comme indiqué ci-dessous, en reprenant l'exemple décrit plus haut :

<chargement de la consigne de comptage dans le registre CREG de la minuterie>
[LOAD TMR] [CVAL]
<activation de la minuterie>
[TMR ON]
<chargement de la signature attendue WS dans le registre REFREG>
[LOAD REFREG] [WS]
<chargement des masques M1, M2, M3 dans le registre CONFREG>
[LOAD CONFREG][M1, M2, M3]
<mise à 0 du registre SREG>
[RESET SREG]
<exécution de la séquence sécurisée>
[READ MEM1][AD1]
[WRITE REGBANK] [AD2]

D'autres instructions peuvent être insérées dans ce programme, notamment des instructions de lecture des registres REFREG, CONFREG, CREG immédiatement après leur chargement, pour s'assurer que les valeurs qui y ont été chargées sont correctes.

La consigne de comptage CVAL chargée dans la minuterie est déterminée en tenant compte du temps d'exécution des instructions de chargement de la signature WS, de chargement des masques M1-M3 et de remise à zéro du registre de signature SREG, car ces instructions s'interposent ici entre l'instruction d'activation de la minuterie et les instructions formant séquence sécurisée elle-même. De façon générale, la valeur de comptage est choisie de manière que l'intervalle de temps mesuré par la minuterie à compter de son activation arrive à expiration après que l'exécution de la séquence sécurisée est terminée. Ainsi, lorsque le masquage du signal d'erreur est levé (TS=1), le signal d'erreur doit entre-temps être passé à 0. La signature courante doit donc, à un instant donné, être égale à la signature attendue, afin que la sortie du comparateur COMP passe à 1 et que la sortie /Q de la bascule FF passe à 0. Dans le cas contraire, la levée du masquage du signal d'erreur ERS provoque de façon irrémédiable l'application de la valeur active du signal d'erreur au circuit de gestion d'erreur 30.

Grâce à la présente invention, la fourniture du signal d'erreur est immunisée contre un éventuel déraillement de programme. La séquence sécurisée n'est pas suivie d'une instruction de comparaison de signatures, une telle comparaison étant faite en temps réel et de façon hardware. Ainsi, si une injection de faute fait dérailler le programme pendant l'exécution de la séquence sécurisée, la signature courante n'est jamais égale à la signature attendue et le circuit de gestion d'erreur 30 est activé lorsque le temps de masquage est écoulé.

En résumé, le circuit intégré selon l'invention est mis par défaut dans un mode d'erreur qui est temporairement masqué par la minuterie, soit un mode d'erreur potentiel, et bascule automatiquement dans un mode d'erreur non masqué, soit un mode d'erreur actif, lorsque l'intervalle de temps mesuré par la minuterie expire, sauf si entre-temps la signature courante est devenue égale à la signature attendue.

Dans un souci de simplicité, divers signaux dont la prévision est à la portée de l'homme de l'art n'ont pas été décrits dans ce qui précède, notamment des signaux de lecture/écriture et de sélection des registres présents dans les circuits 10, 20 selon l'invention.

Il apparaîtra clairement à l'homme de l'art que le second aspect de l'invention est susceptible de diverses variantes de réalisation et perfectionnements. Ainsi, dans une variante de réalisation, la bascule FF est supprimée, le signal d'erreur ERS est fourni directement par le comparateur COMP et un moyen de démarrage et d'arrêt du circuit de calcul de signature SCCT est prévu. Ce moyen de démarrage et d'arrêt est par exemple un moyen interrupteur commandé par software, qui permet d'inhiber l'application du signal d'horloge CK1 au circuit SCCT. Des codes-instructions de démarrage et d'arrêt du circuit SCCT sont également prévus, par exemple des codes START SCCT et STOP SCCT, et sont insérés dans le programme, respectivement avant et après la séquence à sécuriser. Par exemple, la séquence décrite plus haut est modifiée comme suit :

```
[LOAD TMR][CVAL]
[TMR ON]
[LOAD REFREG][WS]
[LOAD CONFREG][M1, M2, M3]
[RESET SREG]
<démarrage du circuit de calcul de signature>
[START SCCT]
[READ MEM1][AD1]
[WRITE REGBANK] [AD2]
<arrêt du circuit de calcul de signature>
[STOP SCCT]
```

D'autre part, le calcul de la signature attendue doit dans ce cas prendre en compte des opérations que le CPU effectue avant l'arrêt effectif du circuit SCCT. Il s'agit notamment des cycles de lecture de l'instruction STOP SCCT (cycles fetch) qui interviennent avant l'exécution proprement dite du code instruction.

De façon générale, il est à la portée de l'homme de l'art de prévoir divers autres modes de réalisation d'un circuit de détection d'erreur permettant de mettre par défaut le circuit intégré dans un mode d'erreur potentiel et de rendre actif le mode d'erreur au terme du comptage d'un intervalle de temps, sauf si la signature courante est entre-temps devenue égale à la signature attendue.

## Revendications

1. Procédé pour surveiller l'exécution d'une séquence de codes-instructions dans un circuit intégré (IC) comprenant une unité centrale de traitement (CPU) prévue pour exécuter de tels codes-instructions, comprenant une étape consistant à :

   - pendant l'exécution de la séquence, produire des signatures cumulatives courantes (CCS) qui sont fonction de signaux logiques (G1, G2, G3) prélevés dans le circuit intégré, jusqu'à obtenir, au terme de l'exécution de la séquence, une signature cumulative finale,

   **caractérisé en ce qu'**il comprend également des étapes consistant à :

   - pendant l'exécution de la séquence, produire un signal d'erreur (ERS) ayant par défaut une valeur active et restant à la valeur active tant que la signature cumulative courante (CCS) est différente d'une signature attendue (WS),
   - masquer le signal d'erreur pendant un intervalle de temps prédéterminé correspondant sensiblement à la durée d'exécution présumée de la séquence, et
   - lever inconditionnellement le masquage du signal d'erreur à l'expiration de l'intervalle de temps prédéterminé.

2. Procédé selon la revendication 1, dans lequel l'intervalle de temps prédéterminé est mesuré par une minuterie (TMR) qui est activée par l'unité centrale avant le commencement de l'exécution de la séquence et qui émet un signal (TS) qui change de valeur lorsque la minuterie a terminé de mesurer l'intervalle de temps, et dans lequel le masquage du signal d'erreur est assuré par un circuit logique (AG) qui est transparent ou non transparent vis-à-vis du signal d'erreur selon la valeur du signal (TS) émis par la minuterie.

3. Procédé selon l'une des revendications 1 et 2, dans lequel chaque signature cumulative courante est produite en synchronisation avec un signal d'horloge (CK1) en fonction d'une signature cumulative précédente (PCS) et de signaux logiques déterministes (G1, G2, G3, $a_0$ à $a_{M-1}$, $d_0$ à $d_{N-1}$, $c_0$ à $c_{K-1}$) d'adresse, de contrôle ou de données intervenant dans l'exécution de la séquence.

4. Procédé selon la revendication 3, dans lequel le signal d'horloge (CK1) qui rythme la production des signatures est le signal d'horloge de l'unité centrale, et dans lequel une signature cumulative courante (CCS) est produite à chaque cycle d'horloge de l'unité centrale, pendant l'exécution de la séquence.

5. Procédé selon l'une des revendications 1 à 4, dans lequel les signaux logiques en fonction desquels les signatures cumulatives courantes sont produites comprennent tout ou partie des signaux suivants : des adresses ($a_0$ à $a_{M-1}$) appliquées à des éléments périphériques de l'unité centrale (MEM1-MEM3, REGBANK), des signaux ($c_0$ à $c_{K-1}$) de contrôle des éléments périphériques, des signaux indicatif d'opérations en cours (FETCH), des données ($d_0$ à

$d_{N-1}$) formant des opérandes ou des codes-instructions, et dans lequel un signal est exclu du calcul d'une signature cumulative s'il n'est pas déterministe pendant le cycle d'horloge durant lequel la signature est produite.

6. Procédé selon l'une des revendications 1 à 4, dans lequel les signatures cumulatives sont produites au moyen d'un circuit de calcul de signatures à logique câblée (SCCT) comprenant des entrées parallèles (I1, I2, I3) reliées à des points du circuit intégré, et dans lequel des entrées du circuit de calcul de signatures sont inhibées au moyen d'un circuit de masquage à logique câblée configurable (CLM), pour exclure des signaux non déterministes.

7. Procédé selon la revendication 6, dans lequel les entrées (I1, I2, I3) du circuit de calcul de signatures sont connectées à un bus de données (DB), à un bus d'adresse (AB), et à un bus de contrôle (CB) qui véhicule des signaux de contrôle d'éléments périphériques de l'unité centrale.

8. Procédé selon l'une des revendications 1 à 7, dans lequel le calcul des signatures cumulatives est effectué au moyen d'un registre à décalage à contre-réaction linéaire (SCCT, LFSR).

9. Circuit intégré (IC) comprenant une unité centrale de traitement (CPU) pour exécuter un programme comprenant des codes-instructions, et des moyens de surveillance de l'exécution d'au moins une séquence de codes-instructions comportant au moins un code-instruction, les moyens de surveillance comprenant un circuit (SCCT) de calcul de signatures pour produire des signatures cumulatives courantes (CCS) qui sont fonction de signaux logiques (G1, G2, G3) prélevés dans le circuit intégré, le circuit de calcul de signatures fournissant, au terme de l'exécution de la séquence, une signature cumulative finale,
**caractérisé en ce que** les moyens de surveillance comprennent également :

   - un moyen (REFREG) de mémorisation d'une signature attendue (WS),
   - une minuterie (TMR) pour mesurer un intervalle de temps prédéterminé,
   - des moyens (COMP, FF) pour produire un signal d'erreur (ERS) ayant par défaut une valeur active dès le commencement de l'exécution de la séquence, et restant à la valeur active tant que la signature cumulative courante (CCS) est différente de la signature attendue (WS), et
   - des moyens (AG, TS) pour masquer le signal d'erreur pendant la mesure de l'intervalle de temps par la minuterie, et lever inconditionnellement le signal d'erreur à l'expiration de l'intervalle de temps.

10. Circuit intégré selon la revendication 9, comprenant un circuit logique (AG) de masquage du signal d'erreur, recevant sur une entrée le signal d'erreur et sur une autre entrée un signal (TS) fournit par la minuterie, le circuit logique de masquage étant transparent ou non transparent vis-à-vis du signal d'erreur selon la valeur du signal (TS) émis par la minuterie.

11. Circuit intégré selon l'une des revendications. 9 et 10, comprenant :

   - un comparateur (COMP) recevant sur une entrée la signature cumulative courante (CCS) et sur une autre entrée la signature attendue (WS), et
   - un élément à mémoire tel une bascule (FF) pour fournir le signal d'erreur, agencé pour désactiver le signal d'erreur lorsque la sortie du comparateur indique une égalité de signatures.

12. Circuit intégré selon l'une des revendications 9 et 10, comprenant :

   - un comparateur (COMP) recevant sur une entrée la signature cumulative courante (CCS) et sur une autre entrée la signature attendue (WS), dont la sortie fournit le signal d'erreur, et
   - des moyens (CPU) pour exécuter une instruction (STOP SCCT) de désactivation du circuit (SCCT) de calcul de signatures.

13. Circuit intégré (IC) selon l'une des revendication 9 à 12, dans lequel le circuit (SCCT) de calcul de signatures comprend des entrées parallèles (I1, I2, I3) reliées en divers points du circuit intégré (DB, AB, CB) où transitent des signaux logiques (G1, G2, G3, $a_0$ à $a_{M-1}$, $d_0$ à $d_{N-1}$, $c_0$ à $c_{K-1}$) d'adresse, de contrôle ou de données intervenant dans l'exécution de la séquence et pouvant être déterministes, et dans lequel un circuit de masquage à logique câblée configurable (CLM) est agencé devant les entrées du circuit de calcul de signatures pour inhiber les entrées susceptibles de recevoir des signaux non déterministes pendant l'exécution de la séquence.

14. Circuit intégré selon la revendication 13, dans lequel le circuit de masquage configurable (CLM) comprend un registre (CONFREG) accessible au moins en écriture pour recevoir une chaîne de bits (M1, M2, M3) formant un masque binaire.

15. Circuit intégré selon l'une des revendications 9 à 14, dans lequel le circuit de calcul de signatures comprend des entrées reliées à des points du circuit intégré où transitent tout ou partie des signaux suivants : des adresses ($a_0$ à $a_{M-1}$) appliquées à des éléments périphériques (MEM1-MEM3, REGBANK) de l'unité centrale, des signaux ($c_0$ à $c_{K-1}$) de contrôle des éléments périphériques, des signaux indicatif d'opérations en cours (FETCH), des données ($d_0$ à $d_{N-1}$) formant des opérandes ou des codes-instructions.

16. Circuit intégré selon l'une des revendications 9 à 15, dans lequel le circuit de calcul de signatures comprend des entrées (I1) reliées à un bus de données (DB), des entrées (I2) reliées à un bus d'adresse (AD), et des entrées (I3) reliées à un bus de contrôle (CB) sur lequel transitent des signaux de contrôle d'éléments périphériques (MEM1-MEM3, REGBANK) de l'unité centrale.

17. Circuit intégré selon l'une des revendications 9 à 15, dans lequel le circuit de calcul de signatures (SCCT) est cadencé par un signal d'horloge (CK1) de l'unité centrale, et calcule une signature cumulative courante à chaque cycle d'horloge, en remplaçant chaque signature précédente par une nouvelle signature, dans un registre (SREG) de mémorisation de la signature courante.

**Claims**

1. A method for monitoring the execution of a sequence of instruction codes in an integrated circuit (IC) comprising a central processing unit (CPU) provided for executing such instruction codes, comprising a step of:

   - during the execution of the sequence, producing current cumulative signatures (CCS) that vary according to logic signals (G1, G2, G3) taken off in the integrated circuit, until a final cumulative signature is obtained at the end of the execution of the sequence,

   **characterized in that** it also comprises steps of:

   - during the execution of the sequence, producing an error signal (ERS) having an active value by default and remaining on the active value while the current cumulative signature (CCS) is different from an expected signature (WS),
   - masking the error signal for a predetermined time interval substantially corresponding to the estimated execution time of the sequence, and
   - unconditionally lifting the masking of the error signal at the end of the predetermined time interval.

2. Method according to claim 1, wherein the predetermined time interval is measured by a timer (TMR) that is activated by the central processing unit before the start of the execution of the sequence and which emits a signal (TS) that changes value when the timer has finished measuring the time interval, and wherein the error signal is masked by a logic circuit (AG) that is transparent or non-transparent in relation to the error signal depending on the value of the signal (TS) emitted by the timer.

3. Method according to one of claims 1 and 2, wherein each current cumulative signature is produced in synchronization with a clock signal (CK1) according to a previous cumulative signature (PCS) and to deterministic address, control or data logic signals (G1, G2, G3, $a_0$ to $a_{M-1}$, $d_0$ to $d_{N-1}$, $c_0$ to $c_{K-1}$) involved in the execution of the sequence.

4. Method according to claim 3, wherein the clock signal (CK1) which paces the production of the signatures is the clock signal of the central processing unit, and wherein a current cumulative signature (CCS) is produced upon each clock cycle of the central processing unit, during the execution of the sequence.

5. Method according to one of claims 1 to 4, wherein the logic signals according to which the current cumulative signatures are produced comprise all or part of the following signals: addresses ($a_0$ to $a_{M-1}$) applied to peripheral elements of the central processing unit (MEM1-MEM3, REGBANK), signals ($c_0$ to $c_{K-1}$) for controlling the peripheral elements, signals indicating operations in progress (FETCH), data ($d_0$ to $d_{N-1}$) forming operands or instruction codes, and wherein a signal is excluded from the calculation of a cumulative signature if it is not deterministic during the clock cycle during which the signature is produced.

6. Method according to one of claims 1 to 4, wherein the cumulative signatures are produced by means of a hard-wired logic signature calculation circuit (SCCT) comprising parallel inputs (I1, I2, I3) linked to points of the integrated circuit, and wherein inputs of the signature calculation circuit are inhibited by means of a configurable hard-wired logic masking circuit (CLM) , to exclude non-deterministic signals.

7. Method according to claim 6, wherein the inputs (I1, I2, I3) of the signature calculation circuit are connected to a data bus (DB), to an address bus (AB), and to a control bus (CB) conveying control signals for controlling peripheral elements of the central processing unit.

8. Method according to one of claims 1 to 7, wherein the calculation of the cumulative signatures is performed by means of a linear feedback shift register (SCCT, LFSR).

9. An integrated circuit (IC) comprising a central processing unit (CPU) for executing a program comprising instruction codes, and means for monitoring the execution of at least one sequence of instruction codes comprising at least one instruction code, the monitoring means comprising a signature calculation circuit (SCCT) for producing current cumulative signatures (CCS) that vary according to logic signals (G1, G2, G3) taken off in the integrated circuit, the signature calculation circuit supplying a final cumulative signature at the end of the execution of the sequence, **characterized in that** the monitoring means also comprise:

   - a means (REFREG) for storing an expected signature (WS),
   - a timer (TMR) for measuring a predetermined time interval,
   - means (COMP, FF) for producing an error signal (ERS) having an active value by default as soon as the execution of the sequence begins, and remaining on the active value while the current cumulative signature (CCS) is different from the expected signature (WS), and
   - means (AG, TS) for masking the error signal during the measurement of the time interval by the timer, and unconditionally lifting the error signal at the end of the time interval.

10. Integrated circuit according to claim 9, comprising a logic circuit (AG) for masking the error signal, receiving the error signal at one input and a signal (TS) supplied by the timer at another input, the logic masking circuit being transparent or non-transparent in relation to the error signal depending on the value of the signal (TS) emitted by the timer.

11. Integrated circuit according to one of claims 9 and 10, comprising:

   - a comparator (COMP) receiving the current cumulative signature (CCS) at one input and the expected signature (WS) at another input, and
   - a memory element such as a flip-flop (FF) for supplying the error signal, arranged for deactivating the error signal when the output of the comparator indicates an equality of signatures.

12. Integrated circuit according to one of claims 9 and 10, comprising:

   - a comparator (COMP) receiving the current cumulative signature (CCS) at one input and the expected signature (WS) at another input, the output of which supplies the error signal, and
   - means (CPU) for executing an instruction (STOP SCCT) for deactivating the signature calculation circuit (SCCT).

13. Integrated circuit (IC) according to one of claims 9 to 12, wherein the signature calculation circuit (SCCT) comprises parallel inputs (I1, I2, I3) linked to various points of the integrated circuit (DB, AB, CB) through which pass logic address, control or data signals (G1, G2, G3, $a_0$ to $a_{M-1}$, $d_0$ to $d_{N-1}$, $c_0$ to $c_{K-1}$) involved in the execution of the sequence and possibly being deterministic, and wherein a configurable hard-wired logic masking circuit (CLM) is arranged in front of the inputs of the signature calculation circuit to inhibit the inputs likely to receive non-deterministic signals during the execution of the sequence.

14. Integrated circuit according to claim 13, wherein the configurable masking circuit (CLM) comprises a register (CONFREG) that is at least write accessible for receiving a string of bits. (M1, M2, M3) forming a binary mask.

15. Integrated circuit according to one of claims 9 to 14, wherein the signature calculation circuit comprises inputs linked to points of the integrated circuit through which all or part of the following signals pass: addresses ($a_0$ to $a_{M-1}$) applied to peripheral elements (MEM1-MEM3, REGBANK) of the central processing unit, signals ($c_0$ to $c_{K-1}$) for controlling the peripheral elements, signals indicating operations in progress (FETCH), data ($d_0$ to $d_{N-1}$) forming operands or instruction codes.

16. Integrated circuit according to one of claims 9 to 15, wherein the signature calculation circuit comprises inputs (I1) linked to a data bus (DB), inputs (I2) linked to an address bus (AD), and inputs (I3) linked to a control bus (CB) on which signals for controlling peripheral elements (MEM1-MEM3, REGBANK) of the central processing unit pass.

17. Integrated circuit according to one of claims 9 to 15, wherein the signature calculation circuit (SCCT) is paced by a clock signal (CK1) of the central processing unit, and calculates a current cumulative signature upon each clock cycle, by replacing each previous signature with a new signature, in a register (SREG) for storing the current signature.

**Patentansprüche**

1. Verfahren zum Überwachen des Ausführens einer Sequenz von Anweisungscodes in einem integrierten Schaltkreis (IC), der eine Zentraleinheit (CPU) aufweist, die vorgesehen ist, um derartige Anweisungscodes auszuführen, umfassend einen Schritt, der darin besteht:

    - während der Ausführung der Sequenz summierende laufende Signaturen (CCS) zu erzeugen, die von Logiksignalen (G1, G2, G3) abhängen, die aus dem integrierten Schaltkreis entnommen werden, bis man am Ende der Ausführung der Sequenz eine abschließende summierende Signatur erzielt,

    **dadurch gekennzeichnet, dass** das Verfahren ferner Schritte umfasst, die darin bestehen:

    - während des Ausführens der Sequenz ein Fehlersignal (ERS) zu erzeugen, das standardgemäß einen aktiven Wert hat und auf dem aktiven Wert bleibt, solange die summierende laufende Signatur (CCS) von einer erwarteten Signatur (SW) unterschiedlich ist,
    - das Fehlersignal während eines vorausbestimmten Zeitintervalls zu maskieren, das im Wesentlichen der voraussichtlichen Ausführungsdauer der Sequenz entspricht, und
    - das Maskieren des Fehlersignals bei Ablauf des vorausbestimmten Zeitintervalls unbedingt aufzuheben.

2. Verfahren nach Anspruch 1, bei dem das vorausbestimmte Zeitintervall von einem Timer (TMR) gemessen wird, der von der Zentraleinheit vor dem Beginn der Ausführung der Sequenz aktiviert wird und ein Signal (TS) sendet, das den Wert wechselt, wenn der Timer das Messen des Zeitintervalls beendet hat, und bei dem das Maskieren des Fehlersignals von einem Logikschaltkreis (AG) sichergestellt wird, der gegenüber dem Fehlersignal gemäß dem Wert des Signals (TS), das von dem Timer gesendet wird, transparent ist oder nicht.

3. Verfahren nach einem der Ansprüche 1 und 2, bei dem jede summierende laufende Signatur in Synchronisation mit einem Taktgebersignal (CK1) in Abhängigkeit von einer vorhergehenden summierenden Signatur (PCS) und von deterministischen Adress-, Steuer- oder Datenlogiksignalen (G1, G2, G3, $a_0$ bis $a_{M-1}$, $d_0$ bis $d_{N-1}$, $c_0$ bis $c_{K-1}$) erzeugt wird, die bei der Ausführung der Sequenz eingreifen.

4. Verfahren nach Anspruch 3, wobei das Taktgebersignal (CK1), das die Produktion der Signaturen taktet, das Taktgebersignal der Zentraleinheit ist, und wobei eine summierende laufende Signatur (CCS) bei jedem Taktgeberzyklus der Zentraleinheit während der Ausführung der Sequenz erzeugt wird.

5. Verfahren nach einem der Ansprüche 1 bis 4, bei dem die Logiksignale in Abhängigkeit von welchen die summierenden laufenden Signaturen erzeugt werden, einen Teil oder alle der folgenden Signale aufweisen: Adressen ($a_0$ bis $a_{M-1}$), die an periphere Elemente der Zentraleinheit MEM1-MEM3, REGBANK) angewandt werden, Steuersignale ($c_0$ bis $c_{K-1}$) der peripheren Elemente, Signale, die laufende Operationen anzeigen (FETCH), Daten ($d_0$ bis $d_{N-1}$), die Operanden oder Anweisungscodes bilden, und bei dem ein Signal aus der Berechnung einer summierenden Signatur ausgeschlossen wird, wenn es während des Taktgeberzyklus, während welchem die Signatur erzeugt wird, nicht deterministisch ist.

6. Verfahren nach einem der Ansprüche 1 bis 4, bei dem die summierenden Signaturen mittels eines Signaturen-Berechnungsschaltkreises mit fest verdrahteter Logik (SCCT) erzeugt werden, der parallele Eingänge (I1, I2, I3) aufweist, die mit Punkten des integrierten Schaltkreises verbunden sind und in welchem die Eingänge des Signaturen-Berechnungsschaltkreises mittels eines Maskierungsschaltkreises mit konfigurierbarer fest verdrahteter Logik (CLM) inhibiert sind, um nicht deterministische Signale auszuschließen.

7. Verfahren nach Anspruch 6, bei dem die Eingänge (I1, I2, I3) des Signaturen-Berechnungsschaltkreises mit einem Datenbus (DB), einem Adressbus (AB) und einem Steuerbus (CB), der Steuersignale für periphere Elemente der Zentraleinheit transportiert, verbunden sind.

8. Verfahren nach einem der Ansprüche 1 bis 7, bei dem das Berechnen der summierenden Signaturen mittels eines Schieberegisters mit linearer Gegenreaktion (SCCT, LFSR) ausgeführt wird.

9. Integrierter Schaltkreis (IC), der eine Zentralverarbeitungseinheit (CPU) aufweist, um ein Programm auszuführen, das Anweisungscodes enthält, und Mittel zum Überwachen des Ausführens mindestens einer Sequenz von Anweisungscodes, die zumindest einen Anweisungscode aufweisen, wobei die Überwachungsmittel umfassen:

   - einen Schaltkreis (SCCT) zum Berechnen von Signaturen, um summierende laufende Signaturen (CCS) zu erzeugen, die von Logiksignalen (G1, G2, G3) abhängen, die aus dem integrierten Schaltkreis entnommen werden, wobei der Signaturen-Berechnungsschaltkreis nach dem Ausführen der Sequenzen eine abschließende summierende Signatur liefert,

   **dadurch gekennzeichnet, dass** die Überwachungsmittel ferner umfassen:

   - ein Mittel (REFREG) zum Speichern einer erwarteten Signatur (WS),
   - einen Timer (TMR) zum Messen eines vorausbestimmten Zeitintervalls,
   - Mittel (COMP, FF) zum Erzeugen eines Fehlersignals (ERS), das standardgemäß einen aktiven Wert hat, sobald die Ausführung der Sequenz beginnt und auf einem aktiven Wert bleibt, solange die summierende laufende Signatur (CCS) von der erwarteten Signatur (WS) unterschiedlich ist), und
   - Mittel (AG, TS) zum Maskieren des Fehlersignals während des Messens des Zeitintervalls durch den Timer und zum unbedingten Aufheben des Fehlersignals beim Ablaufen des Zeitintervalls.

10. Integrierter Schaltkreis nach Anspruch 9, der einen Logikschaltkreis (AG) zum Maskieren des Fehlersignals aufweist, der auf einem Eingang das Fehlersignal und auf einem anderen Eingang ein Signal (TS), das von dem Timer geliefert wird, empfängt, wobei der Maskierungslogikschaltkreis gegenüber dem Fehlersignal je nach dem Wert des Signals (TS), das von dem Timer abgegeben wird, transparent ist oder nicht.

11. Integrierter Schaltkreis nach einem der Ansprüche 9 und 10, folgendes aufweisend:

   - einen Komparator (COMP), der auf einem Eingang die summierende laufende Signatur (CCS) und auf einem anderen Eingang die erwartete Signatur (WS) empfängt, und
   - ein Speicherelement, wie zum Beispiel einen Flip-Flop (FF), um das Fehlersignal zu liefern, eingerichtet, um das Fehlersignal zu deaktivieren, wenn der Ausgang des Komparators eine Signaturgleichheit anzeigt.

12. Integrierter Schaltkreis nach einem der Ansprüche 9 und 10, umfassend:

   - einen Komparator (COMP), der auf einem Eingang die summierende laufende Signatur (CCS) und auf einem anderen Eingang die erwartete Signatur (WS) empfängt, dessen Ausgang das Fehlersignal liefert, und
   - Mittel (CPU), um eine Anweisung (STOP SCCT) zum Deaktivieren des Signaturen-Berechnungsschaltkreises (SCCT) auszuführen.

13. Integrierter Schaltkreis (IC) nach einem der Ansprüche 9 bis 12, bei dem der Signaturen-Berechnungsschaltkreis (SCCT) parallele Eingänge (I1, I2, I3) aufweist, die an verschiedenen Punkten des integrierten Schaltkreises angeschlossen sind (DB, AB, CB), an welchen Adress-, Steuer- oder Datenlogiksignale (G1, G2, G3, $a_0$ bis $a_{M-1}$, $d_0$ bis $d_{N-1}$, $c_0$ bis $c_{K-1}$) durchlaufen, die beim Ausführen der Sequenz eingreifen und deterministisch sein können, und bei dem ein Maskierungsschaltkreis mit konfigurierbarer fest verdrahteter Logik (CLM) vor den Eingängen des Signaturen-Berechnungsschaltkreises eingerichtet ist, um die Eingänge zu inhibieren, die nichtdeterministische Signale während des Ausführens der Sequenz empfangen können.

14. Integrierter Schaltkreis nach Anspruch 13, bei dem der konfigurierbare Maskierungsschaltkreis (CLM) ein Register (CONFREG) aufweist, das zumindest zum Schreiben zugänglich ist, um eine Kette von Bits (M1, M2, M3) zu empfangen, die eine binäre Maske bilden.

**15.** Integrierter Schaltkreis nach einem der Ansprüche 9 bis 14, bei dem der Signaturen-Berechnungsschaltkreis Eingänge aufweist, die mit Punkten des integrierten Schaltkreises verbunden sind, an welchen ein Teil oder alle der folgenden Signale durchgehen: Adressen ($a_0$ bis $a_{M-1}$), die an periphere Elemente (MEM1-MEM3, REGBANK) der Zentraleinheit angewandt werden, Steuersignale ($c_0$ bis $c_{K-1}$) der peripheren Elemente, Signale, die laufende Operationen anzeigen (FETCH), Daten ($d_0$ bis $d_{N-1}$), die Operanden oder Anweisungscodes bilden.

**16.** Integrierter Schaltkreis nach einem der Ansprüche 9 bis 15, bei dem der Signaturen-Berechnungsschaltkreis Eingänge (I1) aufweist, die mit einem Datenbus (DB) verbunden sind, Eingänge (I2), die mit einem Adressbus (AD) verbunden sind und Eingänge (I3), die mit einem Steuerbus (CB) verbunden sind, auf dem Steuersignale peripherer Elemente (MEM1-MEM3, REGBANK) der Zentraleinheit durchlaufen.

**17.** Integrierter Schaltkreis nach einem der Ansprüche 9 bis 15, bei dem der Signaturen-Berechnungsschaltkreis (SCCT) von einem Taktgebersignal (CK1) der Zentraleinheit getaktet wird und eine summierende laufende Signatur bei jedem Taktgeberzyklus berechnet, indem jede vorhergehende Signatur durch eine neue Signatur in einem Register (SREG) zum Speichern der laufenden Signatur ersetzt wird.

**Fig. 1**

**Fig. 2**